# EUROPEAN PATENT SPECIFICATION

(11) **EP 3 377 687 B1**
(45) Date of publication and mention of the grant of the patent: **09.10.2019**
(21) Application number: 15797366.0
(22) Date of filing: 20.11.2015
(51) Int. Cl.: B32B 5/26, B32B 5/02, B32B 7/04, D04H 1/541

(54) **FLAME RETARDANT LINER FOR UPHOLSTERED FURNITURE**
FLAMMHEMMENDE AUSKLEIDUNG FÜR POLSTERMÖBEL
DOUBLURE IGNIFUGE POUR MEUBLES REMBOURRÉS

(43) Date of publication of application: 26.09.2018
(73) Proprietor: IKEA Supply AG, 4133 Pratteln (CH)
(72) Inventor: BERGNER, Anders, S-302 93 Halmstad (SE); ROHDE, Gerd, S-280 70 Lönnsboda (SE)
(74) Representative: Ström & Gulliksson AB
(86) International application number: PCT/EP2015/077256
(87) International publication number: WO 2017/084721

(56) References cited:
- WO-A1-01/68341
- WO-A1-2015/177267
- US-A1- 2003 068 943

## Description

### Field of the invention

The present invention relates to a flame retardant liner for upholstered furniture or mattresses, the liner comprising a carded nonwoven wadding. Further disclosed are upholstered furniture, cushions, quilts, pads or mattresses comprising such a flame retardant liner.

### Background

Nonwovens are used in various applications in the art. Nonwoven fabric is a fabric-like material made from long fibers, bonded together by chemical, mechanical, heat or solvent treatment. The term is used in the textile manufacturing industry to denote fabrics, such as felt, which are neither woven nor knitted. Nonwovens are defined by ISO standard 9092 and CEN EN 29092. Recently EDANA and INDA have proposed the following of nonwoven to the International Standardization Organization: "*A nonwoven is a sheet offibers, continuous filaments, or chopped yarns of any nature or origin, that have been formed into a web by any means, and bonded together by any means, with the exception of weaving or knitting. Wetlaid webs are nonwovens provided they contain a minimum of 50% of man-madefibres or other fibres of non vegetable origin with a length to diameter ratio equals or superior to 300, or a minimum of 30% of man-madefibres with a length to diameter ratio equals or superior to 600, and a maximum apparent density of 0.40 g*/*cm³*."

Upholstered furniture commonly uses a carded nonwoven, often described as wadding or batting, on top of the major comfort material (i.e. polyurethane foam, pocket springs or other flexible materials/constructions and/or on top of frame components for giving desired deformation, flexibility and support) for improving comfort parameters. This carded wadding is commonly between 100 to 400 gram/m² (gsm), but can be significantly lighter or heavier in some applications, and consist in most cases of carded, bonded fibers of thermoplastic polyesters. Typically, the wadding comprises a blend of two different kinds of fibers where one of them, a core-sheath binder fiber, has a core-sheath configuration with a co-polymerized sheath with a significantly lower melting point compared to the core. Typically, other fibers in wadding are selected to have a significantly higher melting point compared to the sheath. The carded fibers are thermally bonded by heating the fibers to melt the sheath layer of the fibers with core-sheath configuration, whereby the fibers are bonded once the sheath layer solidifies.

The wadding is commonly glued (chemical bonded) towards the main comfort material (PU-foam etc.), but can also be adhered using thermal bonding (melting and solidifying of a thermoplastic component), mechanical anchoring by any means, e.g. stitching, or a combination of two or more of these techniques.

In order to protect the wadding from wear and tear and reduce friction between the wadding and the furniture cover (fabric/leather/suede etc.) a thin and flexible fibrous material, e.g. a nonwoven or a textile, with low friction is placed on top of the wadding as an intermediate layer.

A common low-cost material for use as intermediate layer is a meltspun nonwoven of polypropylene (PP), typically a spunbonded and point bonded/calendered PP of 40 to 80 gsm, but other polymers, bonding principles and surface weights are also in use.

It is important that the intermediate layer does not affect deformation, flexibility, and support of the wadding to a great extent, as this in turn may affect comfort parameters of the upholstered furniture; especially the intermediate layer should not be rustling to allow for noiseless deformation Therefore, the intermediate layer, such as a spunbonded and point bonded/calendered PP, is commonly not bonded to the wadding, but typically used as separate layer.

Besides acting as protection from wear and tear, the intermediate layer facilitates convenient assembly of slip-covers and prevents the wadding from being deformed during assembly of the cover. The advantage is both during production, in order to reduce assembly time for a factory assembled cover, but also when the cover shall be removed for washing and re-assembled by customers or when the furniture is sold with slip-on covers for customer assembly.

One major disadvantages of using a separate liner, i.e. an intermediate layer, on top of the wadding is the additional time and cost during production. Further, the intermediate layer typically has to be stitched to the correct shape before assembling the furniture, without or with the cover.

At least some of the disadvantages of using a separate liner, i.e. an intermediate layer, could in principle be overcome by laminating the wadding and the meltspun nonwoven intermediate layer together in order to have a single layer, i.e. a liner, when assembling the furniture. However, common lamination processes using glues and/or thermal bonding systems (cf. DE 4407097 and US 5,951,798) will inherently increase the stiffness of the material, whereby the comfort parameters of the upholstered furniture are reduced. Furthermore, the assembly of the upholster furniture becomes more difficult. In addition, the laminating the wadding and the meltspun nonwoven intermediate layer to a single liner, adds an additional separate process.

Further, it would be desired to provide the liner with flame retarding properties, as synthetic comfort materials, such as polyurethane foam, typically are flammable. A liner having flame retarding barrier properties has the technical effect of lowering the amount and rate of heat released from the barrier upon contact with flame. A liner with flame retarding properties would be useful in increasing the time until the underlying comfort material eventually catches flame or prevent underlying layers to catch flame. Further, it would also be desirable for the liner itself to be less prone to catch flame. Thus, there is a need for a cost-efficient way of providing a liner not suffering from the above mentioned drawbacks.

WO 01/68341 discloses a fire retardant barrier for e.g. upholstered furniture, comprising melt-bonded layers of a batt material containing oxidized polyacrylonitrile and bicomponent binder fibres.

### Summary

Consequently, the present invention seeks to mitigate, alleviate, eliminate or circumvent one or more of the above identified deficiencies in the art and disadvantages singly or in any combination by providing a flame retardant liner for upholstered furniture, the liner comprising a layered material with at least two layers, in which layered material a carded nonwoven wadding, constituting a first layer, is thermally bonded to a carded nonwoven top layer, constituting a second layer. The wadding has a thickness of 4 to 140 mm, and a weight of 100 to 3000 g/m². At least 20 wt% of the staple fibers in the wadding has a linear mass density of at least 6 dtex, and 5 to 40 wt% of the staple fibers in the wadding are bi-component binder fibers. Further, 10 to 100 wt% of the staple fibers in the wadding are flame retardant fibers. The top layer has a thickness of 0.2 to 5 mm and a weight of 40 to 200 g/m². At least 90 wt% of the staple fibers in the top layer has a linear mass density of 5 dtex or less, and 60 wt% to 100 wt% of the staple fibers in the top layer are bi-component binder fibers. Preferably, the thickness of the wadding is at least 2 times, e.g. at least 5 times, the thickness of the top layer.

In such a liner, the first layer, i.e. the wadding, provides "comfort wadding properties", and the second layer, i.e. the top layer, provides properties similar to the ones provided by a meltspun nonwoven. The two layers are provided as parts of a single structure in contrast to solutions in the art, wherein a separate intermediate meltspun nonwoven typically is used in between a separate wadding and the cover. Further, the present liner may be obtained via a single process, dispensing with the need for obtaining the wadding and the top layer, respectively, in separate processes. The flame retardant fibers provide the liner with flame retarding properties.

Disclosed herein is an upholstered piece of furniture having such a liner arranged at least partly over the comfort material of the piece of furniture.

According to a further aspect of the invention there is provided a process for providing such a liner. Such a process comprising the steps of:
- carding staple fibers, wherein at least 20 wt% of the staple fibers have a linear mass density of at least 6 dtex, 10 to 100 wt% of the staple fibers in the wadding are flame retardant fibers, and 5 to 40 wt% of the staple fibers are bi-component binder fibers, to provide a first carded continuous web;
- carding staple fibers having a linear mass density of 5 dtex or less, wherein 50 to 100 wt% of the staple fibers are bi-component binder fibers, to provide a second carded continuous web;
- arranging the first and second carded continuous webs into a first and second layer on top of each other to provide a layered structure;
- heating the layered structure to form an liner having a nonwoven wadding thermally bonded to a nonwoven top layer, wherein said wadding has a thickness of 4 to 140 mm, and a weight of 100 to 3000 g/m²; and said top layer has a thickness of 0.2 to 5 mm, and a weight of 40 to 200 g/m². The thickness of the wadding is preferably at least 2 times, e.g. at least 5 times, the thickness of the top layer.

Further advantageous features of the invention are elaborated in embodiments disclosed herein. In addition, advantageous features of the invention are defined in the dependent claims.

### Detailed embodiments

As explained above, bonding a spunbonded nonwoven on top of a nonwoven wadding will negatively affect the comfort parameters of wadding provided when used in upholstered furniture. Further, it will require additional processing.

In order to provide a single material for use as liner in upholstered furnitures there is, according to an embodiment, provided a liner comprising a layered material with at least two layers. The first layer is a carded, thermally bonded nonwoven wadding and the second layer is a carded, thermally bonded nonwoven top layer. In use the wadding is intended to face the comfort material (e.g. PU-foam), such as the comfort material of a piece of upholstered furniture, or a mattress, and the top-layer is intended to face the cover. The carded nonwoven wadding is thermally bonded to a carded nonwoven top layer, by means of bi-component binder fibers, e.g. core-sheath binder fibers or side-by-side binder fibers, present in the wadding and the top layer, respectively. As known in the art, bi-component fibers are fibers comprising two polymers of different chemical and/or physical properties. Bi-component binder fibers are bi-component fibers having a binder portion with lower melting point than the other portion. In core-sheath binder fibers the sheath has lower melting point than the core. Core-sheath binder fibers have the advantage of having good binding properties, as the binder portion, i.e. the sheath, surround the entire fiber, thereby maximizing the contact surface with other fibers in the web. The liner layer may be placed between a cover and a comfort material in upholstered furniture, mattresses and other related upholstered objects to replace a separate wadding and intermediate layer. In such use, the wadding will face the comfort material, while the top layer will face the cover.

In order to provide the liner with flame retarding properties, at least the first layer, i.e. the wadding, comprises flame retardant fibers. Thus, 10 to 100 wt% of the staple fibers in the wadding are flame retardant fibers. Also the second layer, i.e. the top layer, may comprise flame retardant fibers. Examples of flame retardant fibers include inherently flame retardant PET fibers (e.g. Trevira CS), modacrylic fibers, meta-aramide (e.g. Nomex) fibers, carbon/carbonised fibers, e.g. oxidized polyacrylonitrile (PAN) fibers (e.g. Panox), or flame retardant viscose fibers, such as flame retardant viscose fibers containing silicic acid (e.g. DANUFIL BF from Kelheim Fibres), or any other flame retardant fiber with high decomposition temperature and/or high LOI (Limiting Oxygen Index). Inherently flame retardant PET topically comprises co-monomers providing flame retardant properties. Examples of such co-monomers are phosphorus co-monomers and halogenic co-monomers. The Federal Trade Commission has defined modacrylic fibers as manufactured fibers in which the fiber-forming substance is any long-chain synthetic polymer composed of less than 85%, but at least 35% weight acrylonitrile units. The limiting oxygen index (LOI) is the minimum concentration of oxygen (expressed as a percentage) that supports combustion of a polymer. It is measured by passing a mixture of oxygen and nitrogen over a burning specimen, while reducing the oxygen level until a critical level is reached. Standardized tests, such as the ISO 4589 and ASTM D2863, may be used to determine LOI values. According to the invention, flame retardant fibers as used herein are fibers having LOI (Limiting Oxygen Index) of at least 22, preferably at least 25, such as at least 26. According to an embodiment, the retardant fibers include oxidized polyacrylonitrile (PAN) fibers and/or flame retardant viscose fibers. Thus, at least 50 wt% of the total amount of flame retardant fibers may be oxidized polyacrylonitrile (PAN) fibers and/or flame retardant viscose fibers, such as at least 75 wt%. Use of oxidized polyacrylonitrile (PAN) fibers to provide a flame combustion modified batt is known in the art (cf. WO 2001/68341). According to an embodiment, the total content of flame retardant oxidized polyacrylonitrile (PAN) fibers and/or flame retardant viscose fibers in the liner is 20 to 150 g/m², such as 50 to 100 g/m², or 100 to 150 g/m².

Although flame resistant liners are known in the art, they typically are expensive, and reduce material flexibility, thus affecting comfort parameters. Further, the commonly comprise hazardous chemical additives. The present liner has however been found to provide flame retarding properties without significant negative effects on comfort parameters, seemingly due to the layered structure and the unique top layer.

As already explained, both the wadding and the top layer comprise bi-component binder fibers. In addition to adding flame retardant fibers, also the bi-component binder fibers themselves may be provided with flame retarding properties. Flame retardant bi-component binder fibers are known in the art (see for example JP2004107860, JP2003268631 and US 2003/0129392). Thus, the wadding and the top layer, respectively, may comprise up to 100 % flame retardant fibers, provided that some of the flame retardant fibers are bi-component binder fibers. According to one embodiment the top layer does thus comprise flame retardant bi-component binder fibers. According to an embodiment at least some, and possibly all, of the bi-component binder fibers are flame retardant fibers. According to one embodiment a portion of the bi-component binder fibers of a liner are flame retardant fibers, and another portion of the bi-component binder fibers of the liner are not flame retardant fibers. In an embodiment, wherein not all staple fibers are flame retardant fibers, 20 to 60 wt%, such as 30 to 55 wt%, of the staple fibers in the wadding may be flame retardant fibers. Further, 5 to 60 wt%, such as 5 to 40 wt% or 5 to 25 wt%, of the staple fibers in the top layer may be flame retardant fibers in such an embodiment.

According to another embodiment, the bi-component binder fibers are not flame retardant fibers. In an embodiment, wherein the bi-component binder fibers are not flame retardant fibers, 20 to 60 wt%, such as 30 to 55 wt%, of the staple fibers in the wadding may be flame retardant fibers. Further, 5 to 40 wt%, such as 5 to 25 wt%, of the staple fibers in the top layer may be flame retardant fibers in such an embodiment.

Further, only bi-component binder fibers in one of the layers, i.e. the top layer or the wadding, may be flame retardant fibers. As an example, it may be of interest to use flame retardant bi-component binder fibers in the top-layer. According to a further alternative embodiment flame retardant bi-component binder fibers may be applied both in the top layer and in the wadding.

Typically, a carded nonwoven has properties significantly different from the ones of a spunbonded nonwoven, whereby carded nonwovens not are suitable as intermediate layer on top of the wadding in upholstered furniture. It was however realized that by a high proportion of the staple fibers being bi-component binder fibers, e.g. core-sheath binder fibers, and by a high proportion of the staple fibers being thin staple fibers, a thermally bonded carded nonwoven, having properties, in terms of flexibility, friction, and rustle, resembling the ones of spunbonded nonwovens may be provided. In order to provide such a thermally bonded spunbond like carded nonwoven 60 wt% (weight percent) to 100 wt%, such as 65 wt% to 95 wt%, or 70 wt% to 90 wt%, of the staple fibers should be bi-component binder fibers, e.g. core-sheath binder fibers. Some, or even all, of the bi-component binder fibers, may be flame retardant bi-component binder fibers. While all the staple fibers may be bi-component binder fibers, e.g. core-sheath binder fibers, it may be advantageous to include some staple fibers not being bi-component binder fibers to facilitate the carding of the staple fibers. Further, at least 90 wt%, preferably at least 95 wt%, of the staple fibers should be staple fibers with a linear mass density of 5 dtex or less, preferably 4.5 dtex or less, more preferably 3 dtex or less. If staple fibers not being bi-component binder fibers are present, they should preferably be really thin, i.e. have linear mass density of 4 dtex or less, such as 3 dtex or less or even 2 dtex or less. A thicker staple fiber not being a bi-component binder fiber will provide too much resilience to the top layer for some applications. Further, thicker fibers will provide a too stiff layer, preventing collapsing of the web into a thin, strong and bending flexible spunbond like layer upon thermal binding. Also, as already mentioned, the top layer may comprise flame retardant fibers. However, given that the top layer typically is fairly thin, providing only the top layer with flame retardant fibers is typically not sufficient to provide the liner with adequate flame retarding properties; especially as bending and buckling stiffness should be kept low in the top layer in order to maintain comfort. In the top layer 5 to 100 wt%, such as 5 to 40 wt% or 5 to 25 wt%, of the staple fibers may be flame retardant fibers. For a thicker top layer it may be sufficient to provide only the top layer with flame retardant fibers, as the percentage still may be kept fairly low. While the total amount of flame retardant oxidized polyacrylonitrile (PAN) fibers and/or flame retardant viscose fibers in the liner may be up to 150 g/m², for some applications it may be sufficient to have only 20 g/m². flameflame

The bending and buckling stiffness of the top layer may be reduced by perforating the top layer. According to one embodiment, the top layer is perforated. Perforation may be achieved by using a pinned sleeve. Further, perforation may be achieved by needle punching. Higher degree of perforation may be achieved by needle punching. Perforation is of special interest in embodiments using a high proportion, such as more than 50 wt%, of staple fibers having a linear mass density of more than 4 dtex. Further, also if using a high proportion, such as more than 50 wt%, of staple fibers having linear mass density of more than 3 dtex, perforation may be preferred.

As known by the skilled person decitex (dtex) is a measure of the linear mass density mass for fibers. Dtex is the mass in grams per 10,000 meters.

Upon heating such a combination of thin staple fibers, with a high proportion of bi-component binder fibers, e.g. core-sheath binder fibers, to melt the binder portion, the staple fibers will collapse into a dense carded nonwoven having properties suitable for use as a layer on top of a wadding in a liner for upholstered furniture. Not only is a high proportion of bi-component binder fibers, e.g. core-sheath binder fibers, necessary to provide a dense nonwoven, but also the use of fairly thin staple fibers. Further, the staple fibers in the top layer are typically non-crimped/straight or mechanically crimped in zigzag geometry. Staple fibers crimped in helical geometry, i.e. conjugated fibers are less preferred in the top layer. According to an embodiment, the top layer comprises essentially no conjugated fibers.

Typically the linear mass density of the staple fibers will be at least 0.5 dtex. Thus, the linear mass density of the staple fibers in the top layer may be 0.5 to 5 dtex, such as 0.5 to 4.5 dtex, 0.7 to 4 dtex, or 1.0 to 3 dtex. Normally, the staple fibers in the top layer have an average fiber length between 30 and 100 mm, such as 30 to 80 mm or 50 to 75 mm.

According to an embodiment, the staple fibers in the top layer comprise core-sheath polyester binder fibers having a linear mass density of 5 dtex or less, such as 4.5 dtex or less. If less than 100 wt% of the staple fibers are core-sheath polyester binder fibers, the staple fibers in the top layer may also comprise fibers of polyester, or copolymers thereof having a linear mass density of 5 dtex or less, such as 4.5 dtex or less and/or flame retardant fibers. If present, the fibers of polyester, or copolymers, thereof have a melting point of more than 200°C, e.g. about 260°C. Similarly, also the melting point of the core of the core-sheath polyester binder fibers is higher than 200°C, e.g. about 260°C. Further, the sheath of the core-sheath polyester binder fibers have a melting point of less than 200°C, e.g. about 110°C. The melting point of the polyester sheath may be lowered by co-polymerization with olefin groups, reducing the melting point significantly, e.g. to about 110 °C. Preferably, the melting point of the sheath of the core-sheath polyester binder fiber is at least 50°C lower, such as at least 75°C lower, or even at least 100°C lower, than the melting point of the core. Similarly, the melting point of the sheath of the core-sheath polyester binder fiber is at least 50°C lower, such as at least 75°C lower or even at least 100°C lower, than the melting point of the fibers of polyester, or copolymers thereof, if present.

In an embodiment wherein the staple fibers in the top layer comprise core-sheath polyester binder fibers, optionally flame retardant fibers, and optionally fibers of polyester, or copolymers thereof, at least 80 wt%, such as at least 90 wt% of the staple fibers may be core-sheath polyester binder fibers, flame retardant fibers, and fibers of polyester, or copolymers thereof.

In an embodiment wherein the staple fibers in the top layer comprise core-sheath polyester binder fibers and flame retardant fibers, at least 60 wt%, such as 70 to 90 wt% of the staple fibers may be core-sheath polyester binder fibers and fibers of polyester, or copolymers thereof.

The polyester may be PET (polyethylene terephthalate), PBT (polybutylene terephthalate), PTT (polytrimethylene terephthalate), PLA (polylactic acid), or PEF (polyethylene furanoate), such as PET (polyethylene terephthalate), PLA (polylactic acid) or Polyethylene Furanoate (PEF). As PLA (polylactic acid) have higher LOI than PET (polyethylene terephthalate), it may preferred to use a polyester being PLA (polylactic acid). In order to provide specific properties, such as low melting point for thermal bonding, improved flame retardant properties, increased elasticity and recovery after deformation etc. the polyester may be a co-polymer, such as block co-polymer. As an example, a block co-polymer comprising polyester and polyolefin blocks have lower melting point compared to the corresponding polyester. Further, the polyester compound may comprise additives and/or additional polymers to provide the compound with specific properties.

Further, it was realized that a carded nonwoven spunbond like top layer could by thermally bond to a carded nonwoven wadding in single step, if bi-component binder fibers, e.g. core-sheath binder fibers, are present in both layers. Although the isolated cost for a carded nonwoven top layer will be higher than for a spunbonded nonwoven one, the overall cost for the resulting upholstered furniture will be lower as the number of steps in assembling the upholstered furniture will be reduced, i.e. the production will be facilitated.

In the art, liners wherein spunbonded polypropylene non-wovens are attached to non-woven waddings by use of an adhesive, i.e. melt glue, are known. However, no process is known in the art, wherein staple fibers of various kinds are converted into a layered material comprising two different types of non-woven, one dense and one fluffy, in a single process. Typically, the two different non-wovens are produced in separates processes to be attached to each other thereafter in a separate process. The liner disclosed herein thus not only facilities the assembly of the upholstered furniture, but also the production of liners in which the top layer is to be attached to the wadding.

As mentioned, the wadding of the present liner is fluffy while the top-layer is dense. According to an embodiment, the wadding has a density of 7 to 100 kg/m³, such as 10 to 50 kg/m³. The density of the top layer may be 20 to 400 kg/m³, such as 40 to 200 kg/m³. While the density of the wadding and the top-layer, respectively, may vary a bit, the density of the top layer is typically higher. A combination of two layers with distinct densities may provide the liner with desired properties for some applications.

Thus, a liner comprising a layered material in which carded nonwoven wadding is thermally bonded to a carded nonwoven top layer is obtainable by heating two continuous carded webs comprising bi-component binder fibers, e.g. core-sheath binder fibers, and arranged on top of each other. The webs may or may not be folded one or several times. As already explained, the continuous web to form the top layer will comprise a high proportion of thin staple fibers, and a high proportion of the staple fibers will be bi-component binder fibers, e.g. core-sheath binder fibers.

In those embodiments wherein the top layer comprises somewhat thicker staple fibers, e.g. fibers having a linear mass density more than 3 dtex, such as more than 4dtex, it may preferred to further reduce the thickness of the top layer by means of heated calendar(s). While heating a continuous carded web comprising a high proportion of bi-component binder fibers, e.g. core-sheath binder fibers, to a temperature above the melting point of the binder portion of the fibers *per se* will result in reduction of the thickness of the web, it may still be preferable to further reduce the thickness of the top layer, such as by means of heated calendar(s). Further, the use of heated calendar to affect the top layer may, in addition to reducing its thickness, also smoothen its surface.

As bi-component binder fibers, e.g. core-sheath binder fibers, are present in both carded webs there is no need to add any additional binder. On the contrary, the presence of a separate, additional binder may result in reduced flexibility of the liner. According to an embodiment, the carded nonwoven wadding thus is directly bonded to the carded nonwoven top layer in a bonding process using elevated temperature above the melting point of the binder portion of the bi-component binder fiber, e.g. above the melting point of the sheath of a core-sheath binder fiber.

Further, providing the liner with a third layer with a composition corresponding to the top layer, but at the opposite side of the wadding, be it directly or indirectly attached to the wadding, may also impair the flexibility of the liner, as a sandwich structure will be provided. According to an embodiment, the liner does not comprise any third layer with a composition corresponding to the top layer at the opposite side of the wadding. The liner may according to such an embodiment comprise further layer(s) apart from the wadding and the top layer though.

In order to provide a layered material for use as liner for upholstered furniture, the staple fibers in the continuous web to form the carded nonwoven wadding should be rather thick to provide a high loft, resilience, flexibility and comfort parameters. Thus, at least 20 wt% of the staple fibers in the wadding part of the liner has a linear mass density of at least 6 dtex, such as 7 to 30 dtex, or 8 to 20 dtex. Although a thickness corresponding to up to 30 dtex, the linear mass density of the staple fibers in the wadding commonly are less than 20 dtex. Typically a fairly high proportion of the staple fibers are thick staple fibers. According to an embodiment, at least 30 wt%, such as at least 40 wt%, of the staple fibers in the wadding has a linear mass density of at least 7 dtex, such as at least 8 dtex. Further, the staple fibers should comprise bi-component binder fibers, e.g. core-sheath binder fibers, whereby a continuous web of such rather thick staple fibers could be thermally bond to form a carded nonwoven wadding upon thermally bonding the carded nonwoven top layer to the carded nonwoven wadding. The amount of the bi-component binder fibers, e.g. core-sheath binder fibers, should be 5 to 40 wt%, such as 5 to 35 wt% or 10 to 30 wt%, of the total amount of staple fibers, i.e. the proportion of bi-component binder fibers should be significantly lower in the carded nonwoven wadding compared to the proportion of bi-component binder fibers in the carded nonwoven top layer. By having not more than 40 wt% bi-component binder fibers, the resulting carded nonwoven is suitable for use as wadding. Furthermore, the wadding should comprise flame retardant fibers, such as flame retardant bi-component binder fibers. In the wadding 10 to 100 wt% of the staple fibers are flame retardant fibers. Preferably, 20 to 60 wt%, such as 30 to 55 wt%, of the staple fibers in the wadding are flame retardant fibers. Typically, the weight percentage of flame retardant fibers will be higher in the wadding compared to the top layer. In embodiment wherein flame retardant bi-component binder fibers are present in the top layer, the weight percentage of flame retardant fibers may be higher in the top layer compared to the wadding, given the high amount of bi-component binder fibers in the top layer. As already mentioned, the total content of flame retardant oxidized polyacrylonitrile (PAN) fibers and/or flame retardant viscose fibers in the liner may be 20 to 150 g/m², such as 50 to 100 g/m², or 100 to 150 g/m².

Typically, the staple fibers in the wadding have an average fiber length between 30 and 100 mm, such as 30 to 80 mm or 50 to 75 mm.

By having such a drastic difference in the amount of bi-component binder fibers, e.g. core-sheath binder fibers, in the two different layers, i.e. the top layer and the wadding, respectively, a layered material with completely different mechanical properties in its layered two layers may be provided, although the layers may consist of the same raw material, e.g. polyester. Further, also the usage of thin staple fibers in the top layer and thick staple fibers in the wadding contributes to the different mechanical properties. As already mentioned, the fluffy wadding may have a density of 7 to 100 kg/m³, whereas the top layer, typically being denser, may have a density of 20 to 400 kg/m³. From a re-cycling perspective, it is a clear advantage if a sandwich structure only comprises one material. Thus, the staple fibers in the wadding, according to an embodiment, essentially consist of fibers of polyester, or copolymers thereof, flame retardant fibers and bi-component binder fibers, e.g. core-sheath polyester binder fibers. Similarly, the staple fibers in the top layer according to an embodiment essentially consist of bi-component binder fibers, e.g. core-sheath polyester binder fibers, optionally fibers of polyester, or copolymers thereof, and optionally flame retardant fibers and.

According to an embodiment, the staple fibers in the wadding comprise fibers of polyester, or copolymers thereof, having a linear mass density of at least 6 dtex, such as at least 7 dtex or at least 8 dtex, flame retardant fibers, and core-sheath polyester binder fibers. The fibers of polyester, or copolymers thereof, have a melting point of more than 200°C, e.g. about 260°C. Similarly, also the melting point of the core of the core-sheath polyester binder fibers is higher than 200°C, e.g. about 260°C. Further, the sheath of the core-sheath polyester binder fibers have a melting point of less than 200°C, e.g. about 110°C. Preferably, the melting point of the sheath of the core-sheath polyester binder fiber is at least 50°C lower, such as 75°C lower or even 100°C lower, than the melting point of the core. Similarly, the melting point of the sheath of the core-sheath polyester binder fiber is at least 50°C, such as 75°C lower or even 100°C lower, lower than the melting point of the fibers of polyester, or copolymers thereof. In an embodiment wherein the staple fibers in the wadding comprise core-sheath polyester binder fibers, flame retardant fibers, and fibers of polyester, or copolymers thereof, at least 80 wt%, such as at least 90 wt%, of the staple fibers may be core-sheath polyester binder fibers, flame retardant fibers, and fibers of polyester, or copolymers thereof.

The polyester may be PET (polyethylene terephthalate), PBT (polybutylene terephthalate), PTT (polytrimethylene terephthalate), PLA (polylactic acid), or PEF (polyethylene furanoate), such as PET (polyethylene terephthalate), PLA (polylactic acid) or PEF (polyethylene furanoate). As PLA (polylactic acid) have higher LOI than PET (polyethylene terephthalate), it may preferred to use a polyester being PLA (polylactic acid).In order to provide specific properties, such as low melting point for thermal bonding, improved flame retardant properties, increased elasticity and recovery after deformation etc. the polyester may be a co-polymer, such as block co-polymer. As an example, a block co-polymer comprising polyester and polyolefin blocks have lower melting point compared to the corresponding polyester. Further, the polyester compound may comprise additives and/or additional polymers to provide the compound with specific properties.

Further, in order to provide the wadding with improved resilience, it is preferred if 20 to 60 wt% of the staple fibers in the wadding are fibers being crimped in helical geometry, i.e. conjugated fibers. Typically, the conjugated fibers have a linear mass density of at least 6 dtex, such as at least 7 dtex or at least 8 dtex.

In the liner, the top layer will typically be thinner than the wadding. Thus, the thickness of the wadding is preferably at least 2 times, such as at least 5 times, at least 8 times, or at least 10 times, the thickness of the top layer. The top layer may have a thickness of 0.2 to 5 mm, such as 0.5 to 4 mm or 1 to 4 mm. While a thickness less than 1 mm, e.g. about 0.5 mm, may be preferred in order to negligibly affect comfort parameters of the wadding, a somewhat thicker top layer, e.g. at least 1 mm, may be preferred taking also flame retarding properties into account.

In order to provide an even softer and smoother top layer, the top layer may be treated in various ways. As an example the top layer may be sanded, needled, i.e. perforated, or wave pressed. Further, the top layer may be heat printed to provide it with spunbond like pattern, e.g. squares. Heat-printing may also be used to provide the top layer with a given design, such as printing of trademarks on it.

According to an embodiment, the top layer is perforated. The top layer may be perforated subsequent to the thermal bonding process. Various methods for perforating nonwovens are known in the art. As an example, the top layer may be perforated by use of a pinned sleeve. Further, the top layer may be perforated by, e.g., needle punching providing a degree of perforation. Perforation will improve the flexibility of the liner, the higher degree of perforation, the more flexible liner. According to an embodiment, the top layer has at least 20 perforations per cm², such as at least 30 perforations per cm² or at least 40 perforations per cm². However, perforation will also impart the strength of the liner. A too high degree of perforation may thus be less desirable. Accordingly, the top layer may have less than 100 perforations per cm², such as less than 75 perforations per cm² or less than 60 perforations per cm².

In order to provide the liner with a velvet feeling, filling microfibers may be applied over the top layer.

According to an embodiment, the top layer has a thickness of 0.5 to 4 mm. The top layer further has a weight of 50 to 200 g/m², such as 70 to 170 g/m². On the contrary, the wadding, providing comfort to the upholstered furniture, typically is at least 3 times thicker than the top layer and has a thickness of 4 to 140 mm, such as 5 to 50 mm. The wadding further has weight of 100 to 1000 g/m². While upper limits have been provided for the wadding, in principle any surface basis weight up to the limit for the processing equipment can be used for the wadding.

The overall thickness of the liner may thus be approx. 4 to 140 mm.

According to an embodiment, the thickness of the liner may be determined by standardized methods for determining the thickness of non-wovens in the art. According to the invention, the thickness of the top layer and the wadding are determined according to the ISO method 9073-2:1995 for determining thicknesses of non-wovens. Further, the thickness of the liner may be determined according to the ISO method 9073-2:1995 or according to the INDA/EDANA method WSP 120.2.R4 (12), being based on a previous ASTM method (D5736). For determining the thickness of the liner, the INDA/EDANA method is according to an embodiment preferred.

By using a layered material with at least two layers as described herein, wherein the properties/densities of the two different layers are so different, the material may be used for upholstered furniture for replacing a two layer construction, the top layer fulfilling the pilling, tear strength and flexibility requirements for upholstered furniture. The selection of staple fibers for the top layer, i.e. high proportion of bi-component binder fibers, e.g. core-sheath binder fibers, and the staple fibers being thin is of special importance in providing the liner with the desired properties.

As already described typical advantages of the liner described herein compared to two separate layers include:
- optimized production of upholstered furniture, as the need for an intermediate layer is eliminated;
- improved process economy compared to laminating a meltspun top layer on wadding, which in addition would affect comfort parameters negatively; and
- reduced industrial waste (edge trimming of roll goods, cutting waste etc.), as waste material may be re-opened and used in the carding process again.

It was further found that the present liner, if having a thickness of at least 4 mm such that the thermal insulation is sufficient, fulfills the flame test procedure for barrier materials in TB 117-2013 from State of California, in contrast to a liner solution wherein meltspun nonwoven of polypropylene is used a separate intermediate layer on top of a carded polyester nonwoven, representing state of the art. This is of great importance as it implies that the need for potentially hazardous flame retardants in the comfort material and/or the cover material in upholstered furniture may be dispensed with. Although flame resistant liners are known in the art, they typically are expensive, reduces flexibility, thus affecting comfort parameters.

The liner produced as a layered material with at least two layers may be applied on furniture by gluing pre-cut sheets of material on the structure or by stitching or welding them together (as a slip on liner) before dressing the structure or comfort core/cushion. In this production step the most obvious advantage is reduction of assembly time replacing two separate materials with the two layer sandwich material. Typical, comfort material for upholstered furniture include cellular polymeric foams, i.e. PU-foam, fibrous structures of man-made or natural fibers, pocket springs, woven or knitted textile fabrics suspended in a frame. As recognized by the skilled person, the liner may also be used as a cover for cushions, pads and mattress. Further, the liner may be integrated in quilted upholstered goods or components.

Further disclosed herein is an upholstered piece of furniture having a liner, as described herein, arranged at least partly over the comfort material of the piece of furniture. Although not necessary, the liner will typically be attached to the comfort material of the furniture, such as by gluing. It may further be stitched, welded, or taped into a slip on cover. In order to provide upholstered furniture, a cover is normally arranged at least partly over the liner. The cover may be a permanently attached or it may be a slip dress on cover.

A further embodiment relates to a process for providing a liner for upholstered furniture, which liner comprises a layered material with at least two layers, in which a carded nonwoven wadding, constituting a first layer, is thermally bonded to a carded nonwoven top layer, constituting a second layer. The advantageous of such liner has already been described herein above.

In such a process, staple fibers, of which at least 20 wt% have a linear mass density of at least 6 dtex, 10 to 100 wt% of the staple fibers in the wadding are flame retardant fibers, and 5 to 40 wt% of the staple fibers are bi-component binder fibers, e.g. core-sheath binder fibers, are carded to provide a first carded continuous web. Further, staple fibers having a linear mass density of 5 dtex, such as 4.5 dtex or less, wherein 60 to 100 wt% of the staple fibers are bi-component binder fibers, e.g. core-sheath binder fibers, are carded to provide a second carded continuous web. The different staple fibers may be provided in bales. The bales are opened, scaled and mixed to provide the desired mixture of staple fibers.

The first and second carded continuous webs are then arranged in a first and second layer on top of each other to provide a layered structure. The first layer may comprise just one layer of the first carded continuous web. However, more commonly the first layer will comprise several layers of the first carded continuous web. Such a multilayered first layer is provided by folding the first carded continuous web one or several times. Similar also the second layer may comprise just one layer of the first carded continuous web or it may be multilayered. Also a multilayered second layer may be provided by folding the second carded continuous web one or several times.

According to an embodiment, the first and the second web are parts of the same web. In such an embodiment, the first web is present along one edge of the web in the machine direction, and the second web is present along the other edge of the web in the machine direction. By folding the web into zig-zag lamination, using a cross lapper (cf. e.g. Fig. 1 in EP 0 831 162), the first and second carded continuous webs may be arranged on top of each other, in two or more layers, to provide a layered structure. As the first and second webs are present along opposing edges of the web, they will not be uniformly arranged throughout the zig-zag laminate. One of the webs, in one or several layers, will be present at one side, e.g. the upper side, whereas the other will be present at the other side, e.g. the lower side, in one or several layers.

As both the first and second layer comprises bi-component binder fibers, a liner having a nonwoven wadding thermally bonded to nonwoven top layer may be obtained by heating the sandwich structure in a manner such that the binder portion of the bi-component binder fiber, e.g. the sheath of a core-sheath fiber, melts. The heating will thus not only result in formation of two thermally bonded non-wovens, but also in thermally bonding between the two non-wovens. In the thus obtained liner the wadding has a thickness of 4 to 140 mm, and a weight of 100 to 1000 g/m². The top layer has a thickness of 0.2 to 5 mm, such as 0.5 to 4 mm, and a weight of 50 to 200 g/m², such as 70 to 170 g/m².

Various ways of a heating continuous web comprising bi-component binder fibers, e.g. core-sheath binder fibers, to form a thermally bonded nonwoven are known in the art. As an example, hot air blowing may be used. In order to control the thickness of the resulting liner, some pressure is typically applied to the sandwich structure during the heating step. The pressure may be applied in various ways, such as by use of calendars arranged at a proper distance from each other, by transportation belts on each side of the material, or by compression molding.

The temperature to be used in the heating step depends on the staple fibers. It should be sufficient to melt the binder portion of the bi-component binder fiber, e.g. the sheath of a sheath-core fiber, but not other portion, e.g. the core of a sheath-core fiber. Further, the heat should also not melt the other staple fibers. In one embodiment, wherein the staple fibers are fibers of polyester, or copolymers thereof, flame retardant fibers, and core-sheath polyester binder fibers, the heating temperature may be 160 to 210°C. As the process is for providing a liner as described herein, preferred fibers, ratio of fibers etc. provided for the liner are applicable also with respect to the process for manufacture thereof.

As already described, it may be advantageous to reduce the thickness of the top layer further by means of heated calendar(s). The process may thus comprise a further step of calendaring the heated layered structure with heated calendar(s). Especially when the top layer comprises somewhat thicker staple fibers, e.g. fibers having a linear mass density of more than 3 dtex, it may preferred to further reduce the thickness of the top layer by means of heated calendar(s). In one embodiment, wherein the staple fibers are optionally fibers of polyester, or copolymers thereof, optionally flame retardant fibers and core-sheath polyester binder fibers, the temperature of the heated calendar(s) may be set to 160 to 210°C, such as around 180°C.

Further, as already described, it may also be advantageous to include a step of perforating at least the top layer of the liner in the process to increase the flexibility of the top layer. The perforation may be performed by needle punching.

While the layered structure is heated to thermally bond the first and second layer, respectively, to form a nonwoven wadding thermally bonded to a nonwoven top layer, the layered structure, or the first and/or second continuous web, may also be mechanically bonded, such as by needle punching, prior to the heating. Thus, the process, according to an embodiment, further comprises the step of mechanically bonding, such as by needle punching, the layered structure prior to the heating. The needle punching step in such an embodiment is distinct from the optional perforation step, being performed subsequent to the heating. Alternatively, the process further comprises the step of mechanically bonding, such as by needle punching, the first and/or the second continuous web.

### Exemplary embodiment

In order to provide a liner as a described herein, a liner with a 3 mm//100 g/m² top layer and a 25 mm//200 g/m² wadding was provided by use of commercially available stable fibers. The mechanical properties for such layered material were similar to the ones of a separate meltspun top layer put on top of traditional carded wadding. Further, the thus obtained liner passed CAL 117-2017, without having to add any flame retardant additives.

In providing the liner, staple fibers were obtained as standard bales for further processing at a carding facility. For the top layer, a fiber mixture of 80 wt% 2.2 dtex core-sheath polyester binder fibers and 20 wt% 3 dtex oxidized polyacrylonitrile fibers (PANOX) was used. For the wadding a fiber mixture of 20 wt% 4.4 dtex core-sheath polyester binder fibers, 50 wt% 8 dtex hollow conjugated (crimped in helical geometry) polyester fibers, and 30 wt% 3 dtex oxidized polyacrylonitrile fibers (PANOX)was used.

Two different carding facilities with slightly different machine configurations were used, both producing sandwich liner with identical fiber blends and similar properties fulfilling same test requirements.

One carding facility uses two different cards, combining the two different continuous webs to a sandwich material before a thermal bonding process. The other carding facility uses one carding machine fed by two different mixes of fibers arranging them substantially in two separate layers in a cross-lapper before entering the thermal bonding process.

The process starts by opening the bales, scaling and mixing fibers to specified proportions, carding fibers and arranging the carded continuous webs in two layers to specified surface weights, thermobonding of the sandwich material using hot air blowing though the material in combination with thickness calibration using a controlled surface pressure or controlled distance between two surfaces in the processing equipment.

Without further elaboration, it is believed that one skilled in the art may, using the preceding description, utilize the present invention to its fullest extent. The preceding preferred specific embodiments are, therefore, to be construed as merely illustrative and not limitative of the disclosure in any way whatsoever.

Although the present invention has been described above with reference to specific embodiments, it is not intended to be limited to the specific form set forth herein. Rather, the invention is limited only by the accompanying claims and, other embodiments than the specific above are equally possible within the scope of these appended claims, e.g. different than those described above.

In the claims, the term "comprises/comprising" does not exclude the presence of other elements or steps. Additionally, although individual features may be included in different claims, these may possibly advantageously be combined, and the inclusion in different claims does not imply that a combination of features is not feasible and/or advantageous.

In addition, singular references do not exclude a plurality. The terms "a", "an", "first", "second" etc. do not preclude a plurality.

## Claims

1. A flame retardant liner for upholstered furniture, said liner comprising a layered material with at least two layers, in which layered material a carded nonwoven wadding, constituting a first layer, is thermally bonded to a carded nonwoven top layer, constituting a second layer, wherein
- said wadding has a thickness, according to the ISO method 9073-2:1995, of 4 to 140 mm, and a weight of 100 to 3000 g/m²; at least 20 wt% of the staple fibers in the wadding has a linear mass density of at least 6 dtex; 10 to 100 wt% of the staple fibers in the wadding are flame retardant fibers; and 5 to 40 wt% of the staple fibers in the wadding are bi-component binder fibers; and
- said top layer has a thickness, according to the ISO method 9073-2:1995, of 0.2 to 5 mm, and a weight of 40 to 200 g/m²; at least 90 wt% of the staple fibers in the top layer has a linear mass density of 5 dtex or less; and 60 to 100 wt% of the staple fibers in the top layer are bi-component binder fibers;
wherein the flame retardant fibers are fibers having a limiting oxygen index (LOI) of at least 22 as determined in accordance with ISO 4589.

2. The liner according to claim 1, wherein 5 to 100 wt%, such as 5 to 60 wt%, 5 to 40 wt%, or even 5 to 25 wt%, of the staple fibers in the top layer are flame retardant fibers; optionally the top layer comprises flame retardant bi-component binder fibers; and/or wherein 20 to 60 wt%, preferably 30 to 55 wt%, of the staple fibers in the wadding are flame retardant fibers; preferably the wadding has a higher percentage by weight of flame retardant fibers compared to the top layer.

3. The liner according to any one of the claims 1 to 2, wherein the flame retardant fibers are fibers having a limiting oxygen index (LOI) of at least 25, such as at least 26; and/or wherein said flame retardant fibers are selected from the group consisting of: inherently flame retardant PET fibers, modacrylic fibers, meta-aramide fibers, oxidized polyacrylonitrile (PAN) fibers, and flame retardant viscose fibers, such as flame retardant viscose fibers containing silicic acid; preferably said flame retardant fibers include oxidized polyacrylonitrile (PAN) fibers and/or flame retardant viscose fibers; more preferably at least 50 wt%, still more preferably at least 75 wt%, of the total amount of flame retardant fibers are oxidized polyacrylonitrile (PAN) fibers and/or flame retardant viscose fibers, even still more preferably the total content of flame retardant oxidized polyacrylonitrile (PAN) fibers and/or flame retardant viscose fibers in the liner is 20 to 150 g/m², such as 50 to 100 g/m², or 100 to 150 g/m².

4. The liner according to any one of the claims 1 to 3, wherein the thickness of the wadding is at least 2 times the thickness of the top layer, such as at least 5 times the thickness of the top layer.

5. The liner according to any one of the claims 1 to 4, wherein 65 wt% to 95 wt%, such as 70 wt% to 90 wt%, of the staple fibers in the top layer are bi-component binder fibers; and/or wherein 5 wt% to 35 wt%, such as 10 wt% to 30 wt%, of the staple fibers in the wadding are bi-component binder fibers; and/or wherein at least 90 wt% of the staple fibers in the top layer has a linear mass density of 4.5 dtex or less.

6. The liner according to any one of the claims 1 to 5, wherein the staple fibers in the wadding comprise fibers of polyester, or copolymers thereof, having a linear mass density of at least 6 dtex, flame retardant fibers, and core-sheath polyester binder fibers, the fibers of polyester, or copolymers thereof, and the core of the core-sheath polyester binder fibers having a melting point of more than 200°C, and the sheath of the core-sheath polyester binder fibers having a melting point of less than 200°C; and
wherein the staple fibers in the top layer comprise core-sheath polyester binder fibers having a linear mass density of 5 dtex or less, such as 4.5 dtex or less, optionally flame retardant fibers, and optionally fibers of polyester, or copolymers thereof, having a linear mass density of 5 dtex or less, such as 4.5 dtex or less, the optional fibers of polyester, or copolymers thereof, and the core of the core-sheath polyester binder fibers having a melting point of more than 200°C, and the sheath of the core-sheath polyester binder fibers having a melting point of less than 200°C.

7. The liner according to any one of the claims 1 to 6, wherein the staple fibers in the wadding essentially consist of fibers of polyester, e.g. polyethylene terephthalate (PET), polylactic acid (PLA) or Polyethylene Furanoate (PEF), or copolymers thereof, flame retardant fibers, and bi-component polyester binder fibers; and wherein the staple fibers in the top layer essentially consist of bi-component polyester binder fibers, optionally flame retardant fibers, and optionally fibers of polyester, e.g. polyethylene terephthalate (PET), polylactic acid (PLA) or Polyethylene Furanoate (PEF), or copolymers thereof; and/or wherein 20 to 60 wt% the staple fibers in the wadding are conjugated fibers of polyester, e.g. fibers of polyethylene terephthalate (PET), polylactic acid (PLA) or Polyethylene Furanoate (PEF), or copolymers thereof, having a linear mass density of at least 6 dtex..

8. The liner according to any of the claims 1 to 7, wherein:
- said top layer has a thickness of 0.5 to 4 mm; and/or a weight of 50 to 200 g/m²; and/or
- said wadding has a density of 7 to 100 kg/m³, such as 10 to 50 kg/m³; and
- said top layer has a density of 20 to 400 kg/m³, such as 40 to 200 kg/m³.

9. An upholstered piece of furniture having a flame retardant liner according to any one of the claims 1 to 8, arranged at least partly over the comfort material of the piece of furniture, preferably a cover being arranged at least partly over the liner.

10. A process for providing a liner according to any one of the claims 1 to 8, comprising the steps of:
- carding staple fibers, wherein at least 20 wt% of the staple fibers have a linear mass density of at least 6 dtex, 10 to 100 wt% of the staple fibers in the wadding are flame retardant fibers, and 5 to 40 wt% of the staple fibers are bi-component binder fibers, to provide a first carded continuous web;
- carding staple fibers, wherein at least 90 wt% of the staple fibers has a linear mass density of 5 dtex or less, and wherein 60 to 100 wt% of the staple fibers are bi-component binder fibers, to provide a second carded continuous web;
- arranging the first and second carded continuous webs into a first and second layer on top of each other to provide a layered structure;
- heating the layered structure to form a liner having a nonwoven wadding thermally bonded to a nonwoven top layer, wherein said wadding according to the ISO method 9073-2:1995 has a thickness of 4 to 140 mm, and a weight of 100 to 3000 g/m²; and said top layer according to the ISO method 9073-2:1995 has a thickness of 0.2 to 5 mm, and a weight of 40 to 200 g/m²
wherein the flame retardant fibers are fibers having a limiting oxygen index (LOI) of at least 22 as determined in accordance with ISO 4589.

11. The process according to claim 10, wherein 5 to 100 wt%, such as 5 to 60 wt%, 5 to 40 wt%, or even 5 to 25 wt%, of the staple fibers in the second carded continuous web are flame retardant fibers; optionally the second carded continuous web comprises flame retardant bi-component binder fibers; and/or wherein 20 to 60 wt%, preferably 30 to 55 wt%, of the staple fibers in the first carded continuous web are flame retardant fibers; preferably the first carded continuous web has a higher percentage by weight of flame retardant fibers compared to the second carded continuous web.

12. The process according to any one of the claims 10 to 11, wherein the flame retardant fibers are fibers having a limiting oxygen index (LOI) of at least 25, such as at least 26; and/or, wherein said flame retardant fibers are selected from the group consisting of: inherently flame retardant PET fibers, modacrylic fibers, meta-aramide fibers, flame retardant viscose fibers, such as flame retardant viscose fibers containing silicic acid, and oxidized stabilized polyacrylonitrile (PAN) fibers; preferably said flame retardant fibers include oxidized polyacrylonitrile (PAN) fibers and/or flame retardant viscose fibers; more preferably at least 50 wt%, still more preferably at least 75 wt%, of the total amount of flame retardant fibers are oxidized polyacrylonitrile (PAN) fibers and/or flame retardant viscose fibers.

13. The process according to any one of the claims 10 to 12, wherein 65 wt% to 95 wt%, such as 70 wt% to 90 wt%, of the staple fibers in the second carded continuous web are bi-component binder fibers; and/ or wherein 5 wt% to 35 wt%, such as 10 wt% to 30 wt%, of the staple fibers in the first carded continuous web are bi-component binder fibers.

14. The process according to any one of the claims 10 to 13, wherein pressure is applied to the sandwich structure during the heating step to control the thickness of the liner.

15. The process according to any one of the claims 10 to 14, wherein the staple fibers in the first carded continuous web comprise fibers of polyester, or copolymers thereof, having a linear mass density of at least 6 dtex, flame retardant fibers, and core-sheath polyester binder fibers, the fibers of polyester, or copolymers thereof, and the core of the core-sheath polyester binder fibers having a melting point of more than 200°C, and the sheath of the core-sheath polyester binder fibers having a melting point of less than 200°C; and
wherein the staple fibers in second carded continuous web comprise core-sheath polyester binder fibers having a linear mass density of 5 dtex or less, such as 4.5 dtex or less, optionally flame retardant fibers, and optionally fibers of polyester, or copolymers thereof, having a linear mass density of 5 dtex or less, such as 4.5 dtex or less, the optional fibers of polyester, or copolymers thereof, and the core of the core-sheath polyester binder fibers having a melting point of more than 200°C, and the sheath of the core-sheath polyester binder fibers having a melting point of less than 200°C.

16. The liner according to any one of the claims 10 to 15, wherein the staple fibers in the first carded continuous web essentially consist of fibers of polyester, e.g. polyethylene terephthalate (PET), polylactic acid (PLA) or Polyethylene Furanoate (PEF), or copolymers thereof, flame retardant fibers, and bi-component polyester binder fibers; and wherein the staple fibers in the second carded continuous web essentially consist of bi-component polyester binder fibers, optionally flame retardant fibers, and optionally fibers of polyester, e.g. polyethylene terephthalate (PET), polylactic acid (PLA) or Polyethylene Furanoate (PEF), or copolymers thereof; and/or wherein 20 to 60 wt% the staple fibers in the first carded continuous web are conjugated fibers of polyester, e.g. fibers of polyethylene terephthalate (PET), polylactic acid (PLA) or Polyethylene Furanoate (PEF), or copolymers thereof, having a linear mass density of at least 6 dtex.

## Patentansprüche

1. Eine flammhemmende Auskleidung für Polstermöbel, wobei die Auskleidung ein mehrschichtiges Material mit mindestens zwei Schichten enthält, wobei in dem mehrschichtigen Material eine kardierte vliesartige Wattierung, die eine erste Schicht bildet, thermisch mit einer kardierten Vliesstoff-Oberschicht, die eine zweite Schicht bildet, verbunden ist, wobei
- die Wattierung gemäß der ISO Methode 9073-2:1995 eine Dicke von 4 bis 140 mm, und ein Gewicht von 100 bis 3000 g/m² aufweist, mindestens 20 Gew.-% der Stapelfasern in der Wattierung eine lineare Massendichte von mindestens 6 dtex haben, 10 bis 100 Gew.-% der Stapelfasern in der Wattierung flammhemmende Fasern sind, und 5 bis 40 Gew.-% der Stapelfasern in der Wattierung Zweikomponenten-Bindefasern sind, und
- die Oberschicht gemäß der ISO Methode 9073-2:1995 eine Dicke von 0,2 bis 5 mm und ein Gewicht von 40 bis 200 g/m² aufweist, mindestens 90 Gew.-% der Stapelfasern in der Oberschicht eine Massendichte von 5 dtex oder weniger haben, und 60 bis 100 Gew.-% der Stapelfasern in der oberen Schicht Zweikomponenten-Bindefasern sind,
wobei die flammhemmenden Fasern Fasern sind, die einen Sauerstoffindex (LOI) von mindestens 22 aufweisen, bestimmt nach ISO 4589.

2. Auskleidung gemäß Anspruch 1, wobei 5 bis 100 Gew.-%, wie 5 bis 60 Gew.-%, 5 bis 40 Gew.-%, oder sogar 5 bis 25 Gew.-%, der Stapelfasern in der Oberschicht flammhemmende Fasern sind, wobei optional die Oberschicht flammhemmende Zweikomponenten-Bindefasern enthält, und/oder wobei 20 bis 60 Gew.-%, bevorzugt 30 bis 55 Gew.-%, der Stapelfasern in der Wattierung flammhemmende Fasern sind, wobei die Wattierung bevorzugt einen höheren Gewichtsanteil an flammhemmenden Fasern im Vergleich zu der Oberschicht aufweist.

3. Auskleidung gemäß einem der Ansprüche 1 bis 2, wobei die flammhemmenden Fasern Fasern sind, die einen Sauerstoffindex (LOI) von mindestens 25, wie mindestens 26 haben, und/oder wobei die flammhemmenden Fasern ausgewählt sind aus der Gruppe bestehend aus: inhärend flammhemmenden PET Fasern, Modacrylfasern, Meta-Aramidfasern, oxidierten Polyacrylnitril (PAN)-Fasern, und flammhemmenden Viskosefasern, wie zum Beispiel flammhemmenden Viskosefasern, die Kieselsäure enthalten, wobei die flammhemmenden Fasern bevorzugt oxidierte Polyacrylnitril (PAN)-Fasern und/oder flammhemmende Viskosefasern einschließen, weiter bevorzugt sind mindestens 50 Gew.-%, noch weiter bevorzugt mindestens 75 Gew.-%, der Gesamtmenge flammhemmender Fasern oxidierte Polyacrylnitril (PAN)-Fasern und/oder flammhemmende Viskosefasern, sogar noch weiter bevorzugt ist der Gesamtgehalt der flammhemmenden oxidierten Polyacrylnitril (PAN)-Fasern und/oder flammhemmenden Viskosefasern, in der Auskleidung 20 bis 150 g/m², wie 50 bis 100 g/m², oder 100 bis 150 g/m².

4. Auskleidung gemäß einem der Ansprüche 1 bis 3, wobei die Dicke der Wattierung mindestens zweimal der Dicke der Oberschicht, wie mindestens fünfmal der Dicke der Oberschicht entspricht.

5. Auskleidung nach einem der Ansprüche 1 bis 4, wobei 65 Gew.-% bis 95 Gew.-%, wie 70 Gew.-% bis 90 Gew.-% der Stapelfasern in der Oberschicht Zweikomponenten-Bindefasern sind, und/oder wobei 5 Gew.-% bis 35 Gew.-%, wie 10 Gew.-% bis 30 Gew.-% der Stapelfasern in der Wattierung Zweikomponenten-Bindefasern sind, und/oder wobei mindestens 90 Gew.-% der Stapelfasern in der Oberschicht eine lineare Massendichte von 4.5 dtex oder weniger aufweisen.

6. Auskleidung gemäß einem der Ansprüche 1 bis 5, wobei die Stapelfasern in der Wattierung Fasern aus Polyester oder deren Copolymeren, die eine lineare Massendichte von mindestens 6 dtex haben, flammhemmende Fasern, und Kern-Mantel-Polyesterbindefasern umfassen, wobei die Fasern aus Polyester, oder deren Copolymeren, und der Kern der Kern-Mantel-Polyesterbindefasern einen Schmelzpunkt von mehr als 200 °C haben und der Mantel der Kern-Mantel-Polyesterbindefasern einen Schmelzpunkt von weniger als 200 °C hat,
und wobei die Stapelfasern in der Oberschicht Kern-Mantel-Bindefasern mit einer linearen Massendichte von 5 dtex oder weniger, wie 4,5 dtex oder weniger, optional flammhemmende Fasern, und optional Fasern aus Polyester oder deren Copolymeren mit einer linearen Massendichte von 5 dtex oder weniger, wie 4,5 dtex oder weniger, enthalten, wobei die optionalen Fasern aus Polyester oder deren Copolymeren, und der Kern der Kern-Mantel-Polyesterbindefasern einen Schmelzpunkt von mehr als 200 °C haben, und der Mantel der Kern-Mantel-Polyesterbindefasern einen Schmelzpunkt von weniger als 200 °C hat.

7. Auskleidung gemäß einem der Ansprüche 1 bis 6, wobei die Stapelfasern in der Wattierung im Wesentlichen aus Fasern aus Polyester bestehen, wie zum Beispiel Polyethylenterephthalat (PET), Polymilchsäure (PLA) oder Polyethylenfuranoat (PEF), oder deren Copolymeren, flammhemmenden Fasern, und Zweikomponenten-Polyesterbindefasern, und wobei die Stapelfasern in der Oberschicht im Wesentlichen aus Zweikomponenten-Polyesterbindefasern, optional flammhemmenden Fasern und optional Fasern aus Polyester, wie zum Beispiel Polyethylenterephthalat (PET), Polymilchsäure (PLA), oder Polyethylenfuranoat (PEF), oder deren Copolymeren bestehen, und/oder wobei 20 bis 60 Gew.-% der Stapelfasern in der Wattierung konjugierte Fasern aus Polyester sind, wie zum Beispiel Fasern aus Polyethylenterephthalat (PET), Polymilchsäure (PLA) oder Polyethylenfuranoat (PEF), oder deren Copolymeren, mit einer linearen Massendichte von mindestens 6 dtex.

8. Auskleidung gemäß einem der Ansprüche 1 bis 7, wobei:
- die Oberschicht eine Dicke von 0,5 bis 4 mm, und/oder ein Gewicht von 50 bis 200 g/m² aufweist, und/oder
- die Wattierung eine Dichte von 7 bis 100 kg/m³, wie 10 bis 50 kg/m³ aufweist, und
- die Oberschicht eine Dichte von 20 bis 400 kg/m³, wie 40 bis 200 kg/m³ aufweist.

9. Ein Polsterteil eines Möbelstücks, das eine flammhemmende Auskleidung gemäß einem der Ansprüche 1 bis 8 aufweist, wobei die Auskleidung zumindest teilweise über dem Komfortmaterial des Möbelstücks angeordnet ist, wobei bevorzugt ein Bezug mindestens teilweise über der Auskleidung angeordnet ist.

10. Ein Verfahren für die Bereitstellung einer Auskleidung gemäß einem der Ansprüche 1 bis 8, umfassend die Schritte:
- Kardieren von Stapelfasern, wobei mindestens 20 Gew.-% der Stapelfasern eine lineare Massendichte von wenigstens 6 dtex aufweisen, 10 bis 100 Gew.-% der Stapelfasern in der Wattierung flammhemmende Fasern sind, und 5 bis 40 Gew.-% der Stapelfasern Zweikomponenten-Bindefasern sind, um ein erstes kardiertes kontinuierliches Gewebe bereitzustellen,
- Kardieren von Stapelfasern, wobei mindestens 90 Gew.-% der Stapelfasern eine lineare Massendichte von 5 dtex oder weniger aufweisen, und wobei 60 bis 100 Gew.-% der Stapelfasern Zweikomponenten-Bindemittelfasern sind, um ein zweites kardiertes kontinuierliches Gewebe bereitzustellen,
- Anordnen des ersten und des zweiten kardierten kontinuierlichen Gewebes zu einer übereinander angeordneten ersten und zweiten Schicht, um eine geschichtete Struktur bereitzustellen,
- Erhitzen der geschichteten Struktur um eine Auskleidung mit einer vliesartigen Wattierung, die thermisch mit einer Vliesstoff-Oberschicht verbunden ist, auszubilden, wobei die Wattierung gemäß der ISO Methode 9073-2:1995 eine Dicke von 4 bis 140 mm und ein Gewicht von 100 bis 3000 g/m³ aufweist, und die Oberschicht gemäß der ISO Methode 9073-2:1995 eine Dicke von 0,2 bis 5 mm und ein Gewicht von 40 bis 200 g/m³ aufweist,
wobei die flammhemmenden Fasern Fasern sind, die einen Sauerstoffindex (LOI) von mindestens 22 aufweisen, bestimmt nach ISO 4589.

11. Verfahren gemäß Anspruch 10, wobei 5 bis 100 Gew.-%, wie 5 bis 60 Gew.-%, 5 bis 40 Gew.-%, oder sogar 5 bis 25 Gew.-% der Stapelfasern in dem zweiten kardierten kontinuierlichen Gewebe flammhemmende Fasern sind, wobei das zweite kardierte kontinuierliche Gewebe optional flammhemmende Zweikomponenten-Bindefasern enthält, und/oder wobei 20 bis 60 Gew.-%, bevorzugt 30 bis 55 Gew.-% der Stapelfasern in dem ersten kardierten kontinuierlichen Gewebe flammhemmende Fasern sind, wobei bevorzugt das erste kardierte kontinuierliche Gewebe einen höheren Gewichtsanteil an flammhemmenden Fasern im Vergleich zu dem zweiten kardierten kontinuierlichen Gewebe hat.

12. Verfahren gemäß einem der Ansprüche 10 oder 11, wobei die flammhemmenden Fasern Fasern sind, die einen Sauerstoffindex (LOI) von mindestens 25, wie mindestens 26 haben, und/oder, wobei die flammhemmenden Fasern ausgewählt sind aus einer Gruppe bestehend aus: inhärend flammhemmenden PET-Fasern, Modacrylfasern, Meta-Aramidfasern, flammhemmenden Viscosefasern, wie flammhemmenden Viscosefasern, die Kieselsäure enthalten, und oxidierten stabilisierten Polyacrylnitril (PAN)-Fasern, wobei bevorzugt die flammhemmenden Fasern oxidierte Polyacrylnitril (PAN)-Fasern und/oder flammhemmende Viscosefasern enthalten, weiter bevorzugt sind mindestens 50 Gew.-%, noch weiter bevorzugt mindestens 75 Gew.-%, der Gesamtmenge der flammhemmenden Fasern oxidierte Polyacrylnitril (PAN)-Fasern und/oder flammhemmende Viscosefasern.

13. Verfahren gemäß einem der Ansprüche 10 bis 12, wobei 65 Gew.-% bis 95 Gew.-%, wie 70 Gew.-% bis 90 Gew.-% der Stapelfasern in dem zweiten kardierten kontinuierlichen Gewebe Zweikomponenten-Bindefasern sind, und/oder wobei 5 Gew.-% bis 35 Gew.-%, wie 10 Gew.-% bis 30 Gew.-% der Stapelfasern in dem ersten kardierten kontinuierlichen Gewebe Zweikomponenten-Bindefasern sind.

14. Verfahren gemäß einem der Ansprüche 10 bis 13, wobei auf die SandwichStruktur während des Heizschritts Druck aufgebracht wird, um die Dicke der Auskleidung zu regulieren.

15. Verfahren gemäß einem der Ansprüche 10 bis 14, wobei die Stapelfasern in dem ersten kardierten kontinuierlichen Gewebe Fasern aus Polyester oder deren Copolymeren mit einer linearen Massendichte von mindestens 6 dtex, flammhemmende Fasern, und Kern-Mantel-Polyesterbindefasern umfassen, wobei die Fasern aus Polyester oder deren Copolymeren und der Kern der Kern-Mantel-Polyesterbindefasern einen Schmelzpunkt von mehr als 200 °C haben und der Mantel der Kern-Mantel-Polyesterbindefasern einen Schmelzpunkt von weniger als 200 °C hat, und wobei die Stapelfasern in dem zweiten kardierten kontinuierlichen Gewebe Kern-Mantel-Polyesterbindefasern mit einer linearen Massendichte von 5 dtex oder weniger, wie 4,5 dtex oder weniger, optional flammhemmende Fasern, und optional Fasern aus Polyester oder deren Copolymeren, mit einer lineare Massendichte von 5 dtex oder weniger, wie 4,5 dtex oder weniger, umfassen, wobei die optionalen Fasern aus Polyester oder deren Copolymeren, und der Kern der Kern-Mantel-Polyesterbindefasern einen Schmelzpunkt von mehr als 200 °C haben, und der Mantel der Kern-Mantel-Polyesterbindefasern einen Schmelzpunkt von weniger als 200 °C hat.

16. Auskleidung gemäß einem der Ansprüche 10 bis 15, wobei die Stapelfasern in dem ersten kardierten kontinuierlichen Gewebe im Wesentlichen aus Fasern aus Polyester, wie zum Beispiel Polyethylenterephthalat (PET), Polymilchsäure (PLA), oder Polyethylenfuranoat (PEF), oder deren Copolymeren, flammhemmende Fasern, und Zweikomponenten-Polyesterbindefasern bestehen, und wobei die Stapelfasern in dem zweiten kardierten kontinuierlichen Gewebe im Wesentlichen aus Zweikomponenten-Polyesterbindefasern, optional flammhemmenden Fasern, und optional Fasern aus Polyester, wie zum Beispiel Polyethylenterephthalat (PET), Polymilchsäure (PLA), oder Polyethylenfuranoat (PEF), oder deren Copolymeren bestehen, und/oder wobei 20 bis 60 Gew.-% der Stapelfasern in dem ersten kardierten kontinuierlichen Gewebe konjugierte Fasern aus Polyester, wie zum Beispiel Polyethylenterephthalat (PET), Polymilchsäure (PLA), oder Polyethylenfuranoat (PEF), oder deren Copolymeren, mit einer linearen Massendichte von mindestens 6 dtex sind.

## Revendications

1. Doublure ignifuge pour meubles rembourrés, ladite doublure comprenant un matériau stratifié comportant au moins deux couches, matériau stratifié dans lequel une ouate non tissée cardée, constituant une première couche, est liée thermiquement à une couche supérieure non tissée cardée, constituant une seconde couche, dans laquelle
- ladite ouate a une épaisseur, selon la méthode ISO 9073-2:1995, de 4 à 140 mm, et un poids de 100 à 3 000 g/m² ; au moins 20 % en poids des fibres discontinues dans la ouate ont une densité massique linéaire d'au moins 6 dtex ; 10 à 100 % en poids des fibres discontinues dans la ouate sont des fibres ignifuges ; et 5 à 40 % en poids des fibres discontinues dans la ouate sont des fibres de liaison à deux composants ; et
- ladite couche supérieure a une épaisseur, selon la méthode ISO 9073-2:1995, de 0,2 à 5 mm, et un poids de 40 à 200 g/m² ; au moins 90 % en poids des fibres discontinues dans la couche supérieure ont une densité massique linéaire de 5 dtex ou moins ; et 60 à 100 % en poids des fibres discontinues dans la couche supérieure sont des fibres de liaison à deux composants ;
dans laquelle les fibres ignifuges sont des fibres ayant un indice limite d'oxygène (ILO) d'au moins 22 tel que déterminé selon l'ISO 4589.

2. Doublure selon la revendication 1, dans laquelle 5 à 100 % en poids, tel que 5 à 60 % en poids, 5 à 40 % en poids, ou même 5 à 25 % en poids, des fibres discontinues dans la couche supérieure sont des fibres ignifuges ; facultativement la couche supérieure comprend des fibres de liaison ignifuges à deux composants ; et/ou dans laquelle 20 à 60 % en poids, de préférence 30 à 55 % en poids, des fibres discontinues dans la ouate sont des fibres ignifuges ; de préférence la ouate a un pourcentage en poids de fibres ignifuges plus élevé comparativement à la couche supérieure.

3. Doublure selon l'une quelconque des revendications 1 à 2, dans laquelle les fibres ignifuges sont des fibres ayant un indice limite d'oxygène (ILO) d'au moins 25, tel que d'au moins 26 ; et/ou dans laquelle lesdites fibres ignifuges sont choisies dans le groupe constitué de : fibres intrinsèquement ignifuges en PET, fibres modacryliques, fibres en méta-aramide, fibres en polyacrylonitrile (PAN) oxydé et fibres ignifuges en viscose, telles que fibres ignifuges en viscose contenant de l'acide silicique ; de préférence lesdites fibres ignifuges incluent des fibres en polyacrylonitrile (PAN) oxydé et/ou des fibres ignifuges en viscose ; plus préférablement au moins 50 % en poids, encore plus préférablement au moins 75 % en poids, de la quantité totale des fibres ignifuges sont des fibres en polyacrylonitrile (PAN) oxydé et/ou des fibres ignifuges en viscose, encore plus préférablement encore la teneur totale en fibres ignifuges en polyacrylonitrile (PAN) oxydé et/ou en fibres ignifuges en viscose dans la doublure est de 20 à 150 g/m², tel que de 50 à 100 g/m², ou de 100 à 150 g/m².

4. Doublure selon l'une quelconque des revendications 1 à 3, dans laquelle l'épaisseur de la ouate est d'au moins 2 fois l'épaisseur de la couche supérieure, telle que d'au moins 5 fois l'épaisseur de la couche supérieure.

5. Doublure selon l'une quelconque des revendications 1 à 4, dans laquelle 65 % en poids à 95 % en poids, tel que 70 % en poids à 90 % en poids, des fibres discontinues dans la couche supérieure sont des fibres de liaison à deux composants ; et/ou dans laquelle 5 % en poids à 35 % en poids, tel que 10 % en poids à 30 % en poids, des fibres discontinues dans la ouate sont des fibres de liaison à deux composants ; et/ou dans laquelle au moins 90 % en poids des fibres discontinues dans la couche supérieure ont une densité massique linéaire de 4,5 dtex ou moins.

6. Doublure selon l'une quelconque des revendications 1 à 5, dans laquelle les fibres discontinues dans la ouate comprennent des fibres de polyester, ou de copolymères de celui-ci, ayant une densité massique linéaire d'au moins 6 dtex, des fibres ignifuges, et des fibres de liaison en polyester de type âme-gaine, les fibres de polyester, ou de copolymères de celui-ci, et l'âme des fibres de liaison en polyester de type âme-gaine ayant un point de fusion de plus de 200 °C, et la gaine des fibres de liaison en polyester de type âme-gaine ayant un point de fusion inférieur à 200 °C ; et
dans laquelle les fibres discontinues dans la couche supérieure comprennent des fibres de liaison en polyester de type âme-gaine ayant une densité massique linéaire de 5 dtex ou moins, telle que de 4,5 dtex ou moins, facultativement des fibres ignifuges, et facultativement des fibres de polyester, ou de copolymères de celui-ci, ayant une densité massique linéaire de 5 dtex ou moins, telle que de 4,5 dtex ou moins, les fibres facultatives de polyester, ou de copolymères de celui-ci, et l'âme des fibres de liaison en polyester de type âme-gaine ayant un point de fusion de plus de 200 °C, et la gaine des fibres de liaison en polyester de type âme-gaine ayant un point de fusion inférieur à 200 °C.

7. Doublure selon l'une quelconque des revendications 1 à 6, dans laquelle les fibres discontinues dans la ouate sont essentiellement constituées de fibres de polyester, par exemple de téréphtalate de polyéthylène (PET), de poly(acide lactique) (PLA) ou de furanoate de polyéthylène (PEF), ou de copolymères de ceux-ci, de fibres ignifuges, et de fibres de liaison en polyester à deux composants ; et dans laquelle les fibres discontinues dans la couche supérieure sont essentiellement constituées de fibres de liaison en polyester à deux composants, facultativement de fibres ignifuges, et facultativement de fibres de polyester, par exemple de téréphtalate de polyéthylène (PET), de poly(acide lactique) (PLA) ou de furanoate de polyéthylène (PEF), ou de copolymères de ceux-ci ; et/ou dans laquelle 20 à 60 % en poids des fibres discontinues dans la ouate sont des fibres conjuguées de polyester, par exemple des fibres de téréphtalate de polyéthylène (PET), de poly(acide lactique) (PLA) ou de furanoate de polyéthylène (PEF), ou de copolymères de ceux-ci, ayant une densité massique linéaire d'au moins 6 dtex.

8. Doublure selon l'une quelconque des revendications 1 à 7, dans laquelle :
- ladite couche supérieure a une épaisseur de 0,5 à 4 mm ; et/ou un poids de 50 à 200 g/m² ; et/ou
- ladite ouate a une masse volumique de 7 à 100 kg/m³, telle que de 10 à 50 kg/m³ ; et
- ladite couche supérieure a une masse volumique de 20 à 400 kg/m³, telle que de 40 à 200 kg/m³.

9. Meuble rembourré ayant une doublure ignifuge selon l'une quelconque des revendications 1 à 8, agencée au moins partiellement sur le matériau de confort du meuble, de préférence une couverture étant agencée au moins partiellement sur la doublure.

10. Procédé de fourniture d'une doublure selon l'une quelconque des revendications 1 à 8, comprenant les étapes de :
- cardage de fibres discontinues, dans lequel au moins 20 % en poids des fibres discontinues ont une densité massique linéaire d'au moins 6 dtex, 10 à 100 % en poids des fibres discontinues dans la ouate sont des fibres ignifuges, et 5 à 40 % en poids des fibres discontinues sont des fibres de liaison à deux composants, pour fournir une première bande continue cardée ;
- cardage de fibres discontinues, dans lequel au moins 90 % en poids des fibres discontinues ont une densité massique linéaire de 5 dtex ou moins, et dans lequel 60 à 100 % en poids des fibres discontinues sont des fibres de liaison à deux composants, pour fournir une seconde bande continue cardée ;
- agencement des première et seconde bandes continues cardées en une première et une seconde couche l'une sur l'autre pour fournir une structure stratifiée ;
- chauffage de la structure stratifiée pour former une doublure ayant une ouate non tissée liée thermiquement à une couche supérieure non tissée, dans lequel ladite ouate selon la méthode ISO 9073-2:1995 a une épaisseur de 4 à 140 mm, et un poids de 100 à 3 000 g/m² ; et ladite couche supérieure selon la méthode ISO 9073-2:1995 a une épaisseur de 0,2 à 5 mm, et un poids de 40 à 200 g/m²
dans lequel les fibres ignifuges sont des fibres ayant un indice limite d'oxygène (ILO) d'au moins 22 tel que déterminé selon l'ISO 4589.

11. Procédé selon la revendication 10, dans lequel 5 à 100 % en poids, tel que 5 à 60 % en poids, 5 à 40 % en poids, ou même 5 à 25 % en poids, des fibres discontinues dans la seconde bande continue cardée sont des fibres ignifuges ; facultativement la seconde bande continue cardée comprend des fibres de liaison ignifuges à deux composants ; et/ou dans lequel 20 à 60 % en poids, de préférence 30 à 55 % en poids, des fibres discontinues dans la première bande continue cardée sont des fibres ignifuges ; de préférence la première bande continue cardée a un pourcentage en poids de fibres ignifuges plus élevé comparativement à la seconde bande continue cardée.

12. Procédé selon l'une quelconque des revendications 10 à 11, dans lequel les fibres ignifuges sont des fibres ayant un indice limite d'oxygène (ILO) d'au moins 25, tel que d'au moins 26 ; et/ou, dans lequel lesdites fibres ignifuges sont choisies dans le groupe constitué de : fibres intrinsèquement ignifuges en PET, fibres modacryliques, fibres en méta-aramide, fibres ignifuges en viscose, telles que fibres ignifuges en viscose contenant de l'acide silicique, et fibres en polyacrylonitrile (PAN) stabilisé oxydé ; de préférence lesdites fibres ignifuges incluent des fibres en polyacrylonitrile (PAN) oxydé et/ou des fibres ignifuges en viscose ; plus préférablement au moins 50 % en poids, encore plus préférablement au moins 75 % en poids, de la quantité totale des fibres ignifuges sont des fibres en polyacrylonitrile (PAN) oxydé et/ou des fibres ignifuges en viscose.

13. Procédé selon l'une quelconque des revendications 10 à 12, dans lequel 65 % en poids à 95 % en poids, tel que 70 % en poids à 90 % en poids, des fibres discontinues dans la seconde bande continue cardée sont des fibres de liaison à deux composants ; et/ ou dans lequel 5 % en poids à 35 % en poids, tel que 10 % en poids à 30 % en poids, des fibres discontinues dans la première bande continue cardée sont des fibres de liaison à deux composants.

14. Procédé selon l'une quelconque des revendications 10 à 13, dans lequel une pression est appliquée sur la structure en sandwich durant l'étape de chauffage pour réguler l'épaisseur de la doublure.

15. Procédé selon l'une quelconque des revendications 10 à 14, dans lequel les fibres discontinues dans la première bande continue cardée comprennent des fibres de polyester, ou de copolymères de celui-ci, ayant une densité massique linéaire d'au moins 6 dtex, des fibres ignifuges, et des fibres de liaison en polyester de type âme-gaine, les fibres de polyester, ou de copolymères de celui-ci, et l'âme des fibres de liaison en polyester de type âme-gaine ayant un point de fusion de plus de 200 °C, et la gaine des fibres de liaison en polyester de type âme-gaine ayant un point de fusion inférieur à 200 °C ; et
dans lequel les fibres discontinues dans la seconde bande continue cardée comprennent des fibres de liaison en polyester de type âme-gaine ayant une densité massique linéaire de 5 dtex ou moins, telle que de 4,5 dtex ou moins, facultativement des fibres ignifuges, et facultativement des fibres de polyester, ou de copolymères de celui-ci, ayant une densité massique linéaire de 5 dtex ou moins, telle que de 4,5 dtex ou moins, les fibres facultatives de polyester, ou de copolymères de celui-ci, et l'âme des fibres de liaison en polyester de type âme-gaine ayant un point de fusion de plus de 200 °C, et la gaine des fibres de liaison en polyester de type âme-gaine ayant un point de fusion inférieur à 200 °C.

16. Doublure selon l'une quelconque des revendications 10 à 15, dans laquelle les fibres discontinues dans la première bande continue cardée sont essentiellement constituées de fibres de polyester, par exemple de téréphtalate de polyéthylène (PET), de poly(acide lactique) (PLA) ou de furanoate de polyéthylène (PEF), ou de copolymères de ceux-ci, de fibres ignifuges, et de fibres de liaison en polyester à deux composants ; et dans laquelle les fibres discontinues dans la seconde bande continue cardée sont essentiellement constituées de fibres de liaison en polyester à deux composants, facultativement de fibres ignifuges, et facultativement de fibres de polyester, par exemple de téréphtalate de polyéthylène (PET), de poly(acide lactique) (PLA) ou de furanoate de polyéthylène (PEF), ou de copolymères de ceux-ci ; et/ou dans laquelle 20 à 60 % en poids des fibres discontinues dans la première bande continue cardée sont des fibres conjuguées de polyester, par exemple des fibres de téréphtalate de polyéthylène (PET), de poly(acide lactique) (PLA) ou de furanoate de polyéthylène (PEF), ou de copolymères de ceux-ci, ayant une densité massique linéaire d'au moins 6 dtex.
